# EUROPEAN PATENT APPLICATION

(11) **EP 0 582 824 A2**
(43) Date of publication of application: **16.02.1994**
(21) Application number: 93110590.2
(22) Date of filing: 02.07.1993
(51) Int. Cl.: G06F 15/62

(54) **Orthogonal image rotation using matrix transposition**

(30) Priority: 31.07.1992 US 922655
(71) Applicant: E.I. DU PONT DE NEMOURS AND COMPANY, Wilmington Delaware 19898 (US)
(72) Inventor: Momcilovich, Mark Alexander, Newark, Delaware 19713 (US)
(74) Representative: Selting, Günther, Dipl.-Ing.

(57) **Abstract**

A method and apparatus for rapidly rotating images by ninety degrees and k multiples thereof, where k is an integer equal to 1, 2, 3, ..., using an intermediate buffer memory, effectuating a transposition of the original image pixel data from the rows and columns of the original image into columns and rows of a new rotated image.

## Description

### Background of the Invention

Field of the Invention This invention relates to a method and an apparatus for image rotation and, more particularly, to a method and apparatus for rapidly rotating an image by ninety degrees for display using a matrix transposition.

Description of the Prior Art In the medical diagnostic imaging environment it is often desirable to combine and display a number of images representing different views of a given subject on a single sheet for review by a physician. The images may originate from various sources such as CAT- scans, NMR, radiography etc. and kept in a library of images in digital format. The images may be of different sizes and formats. An appropriate technology for formatting such images in an optimal way as to most efficiently use the available display area is disclosed in copending application Serial Number 07/692,654 filed April 29, 1991 in the names of Faulhaber and Taylor (IM-406) and assigned to the assignee of the present application. This last-mentioned application describes a method and apparatus for capturing and displaying multiple medical diagnostic images stored in digital form on a single sheet of, typically, photographic film.

In order to operate at high speeds and to tie up a computer network as briefly as possible, information for each image is transmitted to a dedicated printer, often referred in the medical diagnostic field as a "camera", for generating a hard copy for study. The information is usually transmitted in serial format over a communication network and is received by the printer and stored in a memory, without undergoing any mapping process. The printer is able to receive and store enough information to produce a complete sheet. The information received typically includes, in addition to actual image data, instructions for image layout and display, i.e., whether individual images are to be reproduced in "portrait" or "landscape" orientation, that is rotated by ninety degrees, as well as instructions regarding border and, if desired, line framing.

A hard copy is produced in the camera by exposing a photosensitive film sheet in a laser type scanner, in raster fashion using information contained in the camera memory. Since the information in the memory is not provided in a format ready for raster display, a rasterization process must occur prior to the printing of the images. Copending application entitled "Raster image Processing with Pixel Mapping to Allow Border Density Allocation", Serial Number 07/---,---, (IM-660) filed concurently herewith in the names of Faulhaber and Momcilovich and assigned to the assignee of the present invention, discloses a method and apparatus for implementing such rasterization as rapidly as possible with minimal computation, producing a visually pleasing display, especially one in which the images are readily distinguished from background areas such as borders, so as not to confuse the observer. The process disclosed does not, however, permit displaying an incoming image rotated by ninety degrees.

There are multiple methods known for image rotation. Such methods usually rely on mathematical computations to determine the location of individual image pixels following rotation. While such methods have numerous advantages and are quite versatile in that they can rotate an image by any arbitrary angular amount, they are computational intensive and as a result, slow. There is still need for a simple image rotation method and apparatus for cases where the rotation is fixed to ninety degrees, which is inexpensive to implement and which effects the rotation with minimal delay.

### Summary of the Invention.

In one aspsect the present invention is directed to a method for rotating an image by ninety degrees and k multiples thereof, where k is an integer equal to 1, 2, 3, ... , the image comprised of a plurality of pixel data representing image raster lines, the method comprising:
(a) determining the number of pixels in each image raster line, and the total number of raster lines in the image,
(b) storing sequentially the pixel data in a buffer memory in rows and columns, using a first predetermined address sequence to map the pixels in preselected rows and columns in said buffer memory,
(c) reading sequentially from said buffer memory the stored data, pixel by pixel in each row and column using a second predetermined address sequence to obtain an output image rotated by ninety degrees or an integer k multiple thereof. As may be appreciated by those skilled in the art, since the value of k = 1 produces a ninety degree rotation, the value of k = 2 produces a one hundred eighty degree rotation, and the value of k = 3 produces a two hundred seventy degree rotation, the values of k = 1, 2, and 3 will, in effect, provide all desired image rotations.

Preferably the output of the buffer memory is stored in a main memory used for storing image information for a rasterization process for eventual image display. Also it is preferred that the buffer memory contains a total number of rows and columns which is higher than the number of either rows or columns in the largest image to be rotated.

For a ninety degree clockwise rotation (k = 1) it is preferred that in mapping the input image into buffer memory, the first raster line be stored in a column spaced from the left-most available column in the buffer memory by the number of raster lines comprising the input image. Output image data is read from the buffer memory from left to right. Therefore, the first raster line read comprises the first row of buffer memory.

In another aspect the present invention is directed to an apparatus for rotating a first image by ninety degrees and k multiples thereof, where k is an integer equal to 1,2,3, ..., the apparatus comprising:
(A) means for receiving information comprising a first image, including,
   (1) means for determining a number of image pixels in a raster line of the first image, and
   (2) means for determining a number of raster lines in said first image;
(B) a buffer memory having rows and columns for mapping said first image;
(C) controlling means associated with said means for receiving data for:
   (1) storing each of the first image raster lines into adjacent buffer memory columns, each pixel of each raster line of the first image stored in one column each column containing one raster line, and
   (2) reading from said buffer memory the stored image data sequentially, row by row and pixel by pixel in each row, to generate a new image, rotated by ninety degrees or an integer k multiple thereof relative to the first image.

The apparatus may further include a main memory in addition to said buffer memory for storing the image data read out from the buffer memory. Further, the apparatus may include computer means for controlling the receiving means, the means for determining the number of image pixels in a raster line and the number of raster lines in said first image, and the controlling means for storing and reading the image data in the buffer memory.

### Brief Description of the Drawings

The invention will be more fully understood from the following detailed description taken in connection with reference to the accompanying drawings in which:
Figure 1 shows a block diagram of an imaging system in which the present invention is used;
Figure 2 shows five sample incoming images including one image to be rotated and a typical display generated by the method of the present invention;
Figure 3 shows the manner of storing an incoming image to be rotated in the rotation memory;
Figure 4 shows a block diagram of apparatus for implementing the present invention;

### Detailed Description of the Invention

Throughout the following description reference will be made to the drawings in which similar numbers indicate similar elements.

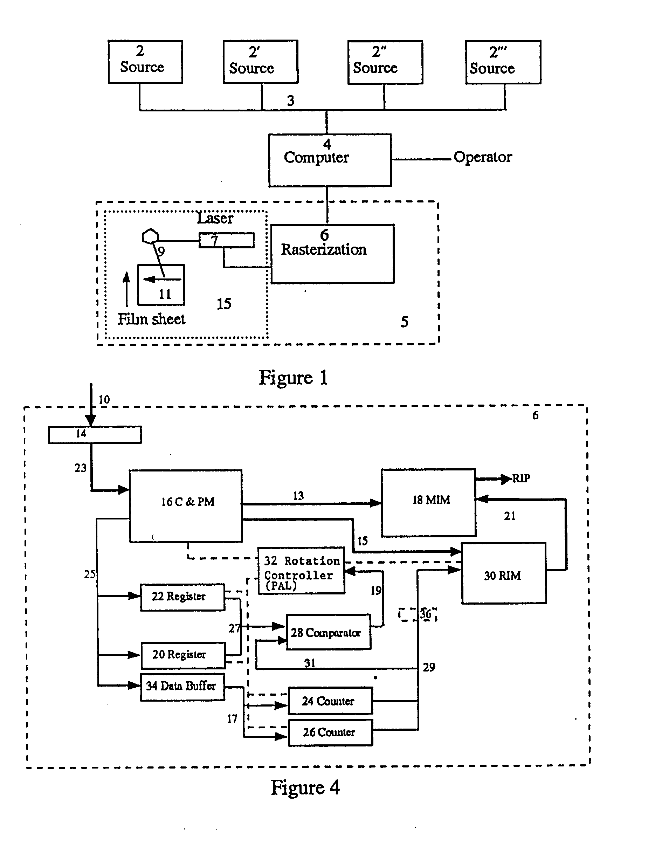

With reference to Figure 1 there is shown an overall medical diagnostic imaging system in which the present invention may be employed. Images from various sources 2,2', 2" etc. are directed over a communications network 3 to a controlling computer 4. The image information in computer 4 is captured and processed for display. Processing involves, inter alia, a page making step in which multiple images are laid out on a predetermined size film sheet according to operator programmed instructions in a manner as to optimize space utilization on the layout sheet. A detailed description of an image layout process is disclosed in the above- referenced copending application Serial Number 07/692,654, while apparatus for implementing preprogrammed enlargements or reductions of the images, particularly for interpolating pixel values when such values are needed is disclosed in copending application Serial Number 07/692,655, filed April 29,1991 in the names of Bryne and Momcilovich and also assigned to the assignee of [this application] the present invention.

After processing the image data and associated display instructions are forwarded from computer 4 to printer 5. Printer 5 comprises a rasterization module 6 and a film exposing device 15, which may include a laser source 7 producing an imaging beam 9 and appropriate film and beam drives to provide a raster scan exposure of a photosensitive film sheet 11.

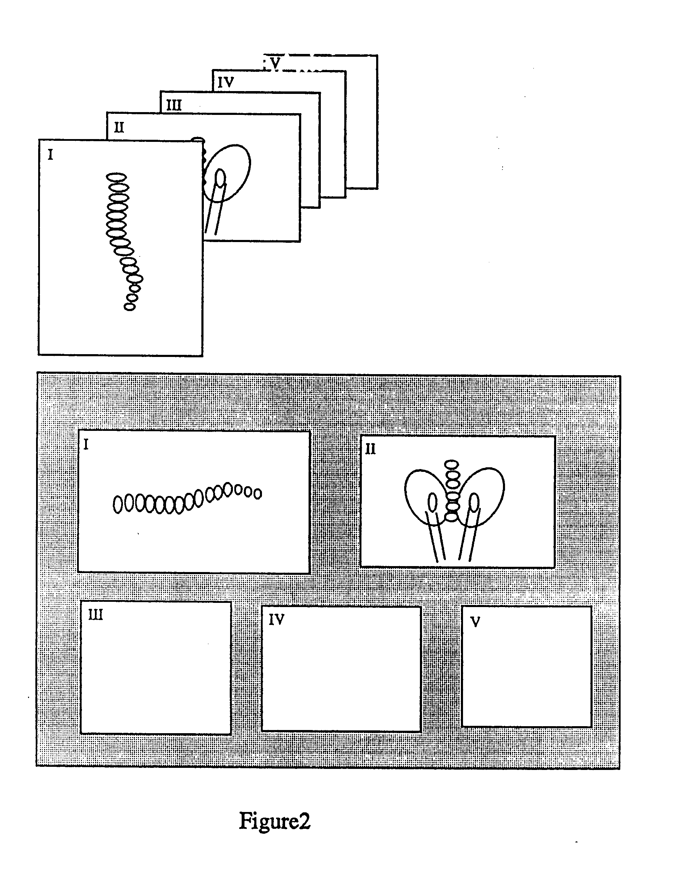

The type of image display produced by the printer is shown in Figure 2 which shows a film sheet 11 on which have been placed five different images (I,11,lll,lV,and V). In order to maximize the use of available display area on the film sheet, image number "I" must be displayed in a landscape mode, i.e., rotated ninety degrees. The rotation shown in Figure 2 is a counter-clockwise rotation. However, clockwise rotation may be used if desired. Figure 4 shows in block diagram an apparatus for the clockwise rotation of image "I".

A communication link 10 connects computer 4 (not shown in Figure 4) to the rasterization module 6 and a bus interface controller 14 for receiving incoming data from the computer 4. The bus interface output is directed to a collect and print manager 16 (C&P M) which includes a central processing unit (CPU) and a random access memory (RAM). Information regarding the display of an incoming image is stored in the RAM portion of the collect and print manager 16. Incoming image data is normally received and stored in main image memory (MIM) 18 over path 13. The collect and print manager 16 controls both the rasterization process and the image rotation. The rasterization process is described in detail in copending application Serial Number 07/---,---, (IM-660) filed concurently herewith and referred to above.

When an image is to be rotated image data is not sent to the main image memory 18 directly. Rather, the collect and print manager 16 acts as a switch and directs the image data to a rotation image buffer memory (RIM) 30 over path 15.

A rotation controller 32 associated with the collect and print manager 16 (as indicated by the dotted line paths) controls the storage of the data in the rotation image buffer memory 30 by providing the appropriate storage address for each incoming pixel and the proper readout sequence, using a combination of registers and counters as described below. Preferably the rotation controller 32 is implemented using a programmable logic array (PAL).

Connected to the collect and print manager 16 and rotation controller 32 are a data buffer 34, a register 22 which is loaded by the collect and print manager 16 with a number corresponding to the number of columns in an image to be rotated and a register 20 which is loaded by the collect and print manager 16 over path 25 with the number of pixels in a row of the image to be rotated. Both registers are controlled by the rotation controller 32.

The data buffer 34 output goes over path 17 to a row address counter 24 and a column address counter 26. Both counters and the data buffer 34 are controlled by the rotation controller 32. A comparator 28 is connected to the output of registers 22 and 20 over path 27 and row address counters 24 and 26 over path 29 and 31. The comparator output goes to rotation controller 32 over path 19. The output of the row and column address counters 24, 26 over path 29 controls the writing and reading of the data into and from rotation image buffer memory 30. An optional address buffer 36, shown in dotted lines, may be used, in path 29, between the output of the counters 24, 26 and rotation image buffer memory 30.

Not illustrated is a FIFO memory buffer which may be included as part of the interface controller 14 particularly in cases where transmission between a host computer and the main image memory 18 occurs at asynchronous data rates.

In operation, image data is received by the collect and print manager 16 together with instructions as to the display format of the image. Based on the display information the image data is directed to the main image memory 18 if it is to be displayed in the same format as received, or to the rotation image buffer memory 30 if it is to be rotated.

The information received by the collect and print manager 16 over path 23 includes information on the number of pixels in each image row and the number of image rows, or lines, in the image. Under the control of rotation controller 32, these numbers are loaded in registers 20 and 22 respectively, and in rotation image buffer memory 30 address counters 24 and 26. However, counter 24, which is the counter which counts pixels in a row in rotation image buffer memory 30 is loaded with the number of image rows, while counter 26 which counts the number of lines in an image in rotation image buffer memory 30, is loaded with the number of pixels in a row.

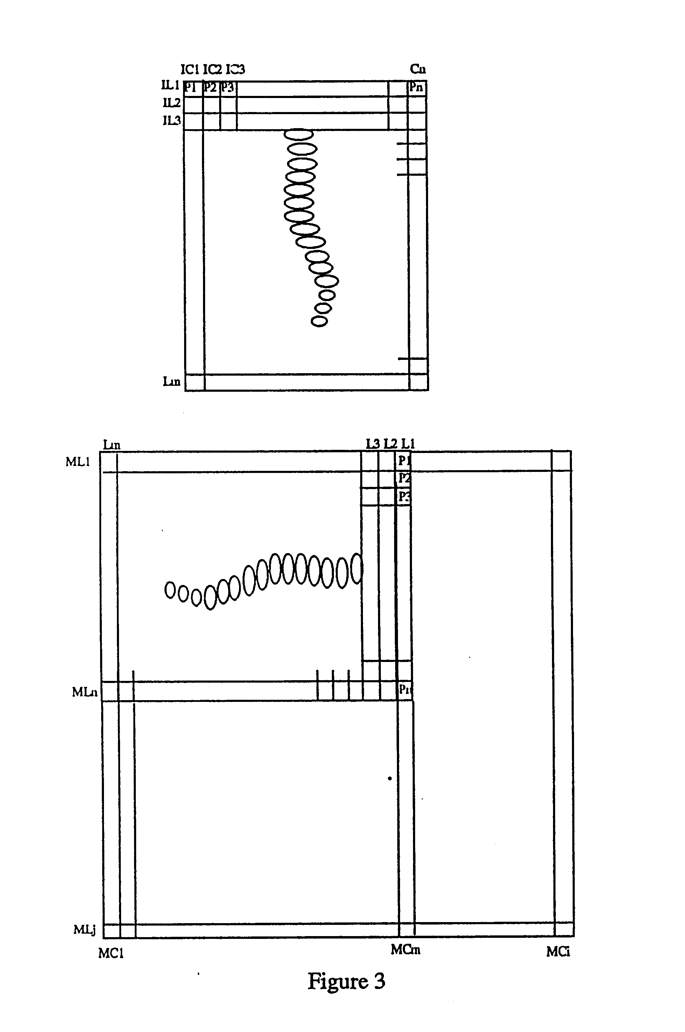

Referring now to Figure 3, data corresponding to image line one (IL1) of image I (of Figure 2) is serially received by the collect and print manager 16 and stored in the rotation image buffer memory 30. The storage address of each arriving pixel is determined by the address counters 24 and 26, which have been pre-loaded. Register 20 has also been loaded with the number "n" of pixels in a row, and register 22 with the total number of rows "m" in the image. Counter 26, which determines the rotation image buffer memory 30 column address, is loaded with "m". Counter 24 determining the row address is set at zero.

The first pixel, P1, is stored in line ML1, and column MCm of the rotation image buffer memory 30. The next pixel, P2, is placed in memory line ML2 and column MCm of the rotation image buffer memory 30. The memory assignment continues in like manner until pixel Pn is placed in MLn and MCm of the rotation image buffer memory 30. Counter 24 output is compared with register 20 and when both are the same, counter 26 is decrimented by one, and counter 24 reset. The next pixel is then placed at address ML1 and MC(m-1) of the rotation image buffer memory 30. This continues in like manner until counter 26 reaches zero.

Rotation controller 32 next initiates the reading of the data stored in rotation image buffer memory 30. The data read from the rotation image buffer memory 30 is directed to the main image memory 18 over path 21 . In the readout process, the counters 24 and 26 operate as follows. Both are initially set at the left-most pixel address in memory 30, i.e., (0,0), corresponding to ML1 and MC1. ML1 remains fixed while MC1 increments to 1, reading the pixel data located at ML1 and MC2, and so on. The counter output is compared with the register values in register 20 for counter 26 and in register 22 for counter 24. When the comparator output indicates that counter 26 has reached the same value as register 20, counter 26 is reset and counter 24 is incremented by 1. The process repeats until both counters 24 and 26 have the same output as registers 20 and 22, at which time the image has been completely read out and transferred rotated by ninety degrees in the main image memory 18.

Instead of (0,0), the initial counter setting may also be the maximum size,i,j of the rotation image buffer memory 30. In this case the counters 24 and 26 start decrimenting from j and i rather than incrementing, until the count reaches a value in the registers as before, the registers value this time being, rather than "n" and "m","i-n" and "j-m". The rest of the process is the same as described above.

In a linear algebra sense the process may be viewed as if the incoming image is a matrix of numbers on which is performed a simple transposition of row and column vectors. Accordingly, the present invention should be understood to extend beyond the field of image rotation, to encompass the transposition of any matrix of data. The first input row vector is transposed to the last column vector. The second input row vector is transposed to the next to the last column until the last input row vector is transposed to the first column in the matrix of memory cells in the rotation image buffer memory 30. Of course, it takes twice as long for a frame to be rotated and stored in the main memory for an ensuing rasterization step. However for comparison purposes, rotating the same image using as the computer 4 an IBM AT personal computer operating at sixteen MHz to rotate the image in its memory space before transmitting the image data to the printer, the process takes about seventy five times longer.

Heretofore the process has been described and hardware disclosed for performing ninety degree clockwise rotation. However it will be apparent to those skilled in the art that using the present invention an image rotation of any multiple k of ninety degrees (i.e., ninety k, where k is an integer equal to 1, 2, 3,...) may similarly be performed. Where k= 1, the clockwise rotation discussed above is performed. Where k = 2, a one hundred eighty degree rotation is effected. Where k=3, a ninety degree counter-clockwise rotation is produced. Although k can have, in theory, any integer value, the rotations produced where k = 1, 2, or 3 are the most practical since it is readily apparent that rotations produced where k = or more result in images that are identical to the input image of the rotated image produced when k = 1, 2, or 3. Such rotations can be effected with only minor modifications involving selecting the starting point of the placement of the incoming image in the rotation image buffer memory 30 by appropriately selecting the initial values in the registers and counters and either incrementing or decrementing the counters to generate the writing and reading addresses of the rotation image buffer memory 30.

Those skilled in the art, having the benefit of the teachings herein above set forth, can effect numerous modifications thereto, which are to be construed as being encompassed within the scope of the present invention as set forth in the appended claims.

## Claims

1. A method for rotating an image by ninety degrees and k multiples thereof, where k is an integer equal to 1, 2, 3, ..., the image comprised of a plurality of pixel data representing image raster lines, the method comprising:
(a) determining the number of pixels constituting each image raster line, and the total number of raster lines constituting the image,
(b) storing sequentially the pixel data in a buffer memory in rows and columns, using a first predetermined address sequence to map the pixels in preselected rows and columns in said buffer memory, and
(c) reading sequentially from said buffer memory the stored data, pixel by pixel in each row and column using a second predetermined address sequence to obtain an output image rotated by ninety degrees or a multiple k thereof.

2. A method for rotating images by ninety degrees, from digital image data representing a first image comprising:
(a) determining a number of image pixels comprising a raster line of the first image;
(b) determining a number of raster lines comprising said first image;
(c) mapping said first image in a buffer memory having rows and columns by storing each of the first image raster lines into adjacent buffer memory columns, each pixel of each raster line of the first image stored in one column each column containing one raster line;
(d) reading from said buffer memory the stored image data sequentially, row by row and pixel by pixel in each row, to generate a new image, rotated by ninety degrees relative to the first image.

3. The method of claim 2 further comprising:
(e) storing the image data read in step (d) in a second memory prior to further processing.

4. The method in accordance with claim 3 wherein the second memory also includes image data for a plurality of images including both rotated and non-rotated images.

5. The method of claim 4 further comprising the step of displaying the stored images using a display apparatus employing raster scanning.

6. The method of claim 2 wherein the buffer memory size exceeds the number of rows and columns of the largest image to be rotated.

7. The method of claim 2 wherein the reading of data from the buffer memory proceeds from left to right and wherein the first raster line is stored in a column spaced from the left most available column in the buffer memory by the number of raster lines comprising the first image.

8. Apparatus for rotating a first image by ninety degrees, the apparatus comprising:
(A) means for receiving information comprising a first image, including
(1) means for determining a number of image pixels in a raster line of the first image, and
(2) means for determining a number of raster lines in said first image;
(B) a buffer memory having rows and columns for mapping said first image;
(C) controlling means including register means, counter means and comparator means associated with said means for receiving data for:
(i) storing each of the first image raster lines into adjacent buffer memory columns, each pixel of each raster line of the first image stored in one column each column containing one raster line, and
(ii) for reading from said buffer memory the stored image data sequentially, row by row and pixel by pixel in each row, to generate a new image, rotated by ninety degrees relative to the first image.

9. The apparatus according to claim 8 further including a main memory in addition to said buffer memory for storing the image data read from the buffer memory.

10. The apparatus according to claim 9 further comprising a computer means for controlling the receiving means, the means for determining the number of image pixels in a raster line, and the number of raster lines in said first image, and the controlling means for storing and reading out the image data from the buffer memory.

11. A method for transposing a matrix of data comprising the steps of:
(a) determining the number of rows of the matrix;
(b) determining a number of columns of the matrix;
(c) mapping the elements of the matrix in a buffer memory having rows and columns by storing each of the first row of the matrix into adjacent buffer memory columns, each element of each row of the matrix being stored in one column;
(d) reading out of said buffer memory the stored matrix elements sequentially, row by row and element by element in each row, to generate a transposed matrix.

12. Apparatus for transposing a matrix comprising:
(A) means for determining the number of rows and columns of the matrix to be transposed;
(B) a buffer memory having rows and columns for storing said elements of the matrix to be transposed;
(C) controlling means including register means, counter means and comparator associated with said determining means for:
(i) storing each element of each row of the matrix into adjacent buffer memory columns so that each row of the matrix to be transposed is stored in one column of the matrix, and
(ii) for reading from said buffer memory the stored matrix elements sequentially, row by row and element by element in each row, to generate a transposed matrix.
